# EUROPÄISCHE PATENTSCHRIFT

(11) **EP 3 909 808 B1**
(45) Veröffentlichungstag und Bekanntmachung des Hinweises auf die Patenterteilung: **13.12.2023**
(21) Anmeldenummer: 21020150.5
(22) Anmeldetag: 15.03.2021
(51) Int. Cl.: B60P 1/64, B60P 3/34, B60P 1/52, B65D 90/14, B65D 90/18, B65D 90/00, B60J 7/04, B60J 7/16

(54) **FAHRZEUGVERLADESYSTEM FÜR EINE FAHRZEUGKABINE**
VEHICLE LOADING SYSTEM FOR A VEHICLE CABIN
SYSTEME DE CHARGEMENT DE VEHICULE POUR UNE CABINE DE VEHICULE

(30) Priorität: 13.05.2020 LU 101795
(43) Veröffentlichungstag der Anmeldung: 17.11.2021
(73) Patentinhaber: Lindermayer, Ludwig Sebastian, 81549 München (DE)
(72) Erfinder: Lindermayer, Ludwig Sebastian, 81549 München (DE)

(56) Entgegenhaltungen:
- DE-A1- 10 104 529
- DE-T2- 69 120 035
- EA-B1- 016 689
- US-B1- 6 322 127
- US-B1- 9 302 605

## Beschreibung

Die vorliegende Erfindung bezieht sich auf ein Fahrzeugverladesystem für eine Fahrzeugkabine mit Hubdach, eine Fahrzeugkabine und ein Verladeverfahren. Im Bereich der Freizeit-, Berufs- oder Militärfahrzeuge kann es wünschenswert sein ein Fahrzeug möglichst kostengünstig und schnell über große Distanzen zu verbringen. Ein kostengünstigstes Verbringungsmittel stellen die verschiedenen Standartcontainer dar.

Da bei Fahrzeugaufbauten, sogenannten Fahrzeugkabinen oder Fahrzeugkoffern die Außenabmessungen möglichst klein bei möglichst großer Nutzfläche sein sollen, sind Hubdachkoffer seit einigen Jahren bekannt. Bei Fahrt des Fahrzeuges ist das Hubdach in einer eingefahrenen Position und die Fahrzeugkabine ist minimal hoch. Wenn die Fahrzeugkabine verwendet werden soll, wird das Hubdach in seine ausgefahrene Position gebracht und das entstandene zusätzliche Volumen im Innenraum kann genutzt werden.

Im Falle einer Verladung des Fahrzeuges zum Zwecke der Verbringung z.B. auf einen anderen Kontinent ist es wünschenswert eine Verladung nur mit Bordmitteln des Fahrzeuges, also ohne zusätzliches Equipment, welches nur zum Verladen gebraucht wird und am Zielort unter Umständen nach dem Ausladen wieder aufwändig gesondert abtransportiert werden muss, durchzuführen.

Im Stand der Technik sind einige militärische und zivile Verladesysteme wie das System für den deutsche Militärshelter FMII oder für zivile Reisemobile von der Firma Unicat die Sonderkonstruktion "MD52h" bekannt. Jedoch haben die bekannten Systeme den Nachteil, dass gesondertes Equipment (z.B. Hebevorrichtungen) benötigt wird, um die Ver- und Entladung des Fahrzeugs und das Abnehmen und Aufsetzen der Fahrzeugkabine auf das Trägerfahrzeug durchzuführen. Dokument DE 101 04 529 A1 offenbart den Oberbegriff des unabhängigen Anspruchs 1.

Die vorliegende Anmeldung hat es zur Aufgabe ein Fahrzeugverladesystem für eine Fahrzeugkabine, eine Fahrzeugkabine und ein Verladeverfahren bereit zu stellen, dass eine einfache Verladung mit Bordmitteln ermöglicht. Diese Aufgabe wird durch die beigefügten unabhängigen Ansprüche gelöst.

Nach einem Aspekt der vorliegenden Anmeldung umfasst eine Fahrzeugkabine einen Kabinenkörper, ein Hubdach und zumindest eine Bewegungseinrichtung. Die Bewegungseinrichtung ist mit dem Kabinenkörper und dem Hubdach so verbunden, dass sie das Hubdach in einer ersten Verfahrrichtung aus einer eingefahrenen Position in eine ausgefahrene Position verfahren kann. Die Bewegungseinrichtung ist an einem ersten Ende lösbar mit dem Hubdach verbunden. Weiterhin ist die Bewegungseinrichtung in einem vom Hubdach gelösten Zustand in einer zweiten Verfahrrichtung, welche entgegengesetzt zur ersten Verfahrrichtung ist, unter ein Bodenniveau der Fahrzeugkabine verfahrbar. Die kann den Vorteil haben, dass die Bewegungseinrichtung dazu verwendet werden kann das Kabinendach anzuheben und weiterhin zum Anheben der Fahrzeugkabine von einem Trägerfahrzeug verwendet werden kann. Damit kann eine platzsparende Fahrzeugkabine realisiert werden, die selbstverladefähig ist. Die zumindest eine Bewegungseinrichtung kann im Innenraum der Fahrzeugkabine, oder außen an der Fahrzeugkabine angeordnet werden. Auch kann ein Ende der Bewegungseinrichtung im Innenraum der Fahrzeugkabine angeordnet sein und das jeweilig andere Ende außen an der Fahrzeugkabine.

Die Bewegungseinrichtung kann mehrfach vorhanden sein, z.B. in jeder der vier Ecken einer in den meisten Fällen quaderförmigen Fahrzeugkabine. Die zumindest eine Bewegungseinrichtung kann weiterhin elektrisch, hydraulisch, pneumatisch angetrieben sein oder eine Kombination davon. Die Bewegungseinrichtung kann z.B. ein doppelt- oder einfachwirkender Zylinder (konventioneller Zylinder) sein oder ein Zylinder mit durchgehender Kolbenstange oder ein elektrisch betriebenes Äquivalent hierzu. Im Falle eines konventionellen Zylinders kann das bewegliche Ende des Zylinders (Kolbenstange) am Hubdach befestigt werden und der Zylinderkörper am Kabinenkörper. Somit kann das Hubdach angehoben werden. Wenn die Fahrzeugkabine angehoben werden soll, dann wird das bewegliche Ende am Kabinenkörper befestigt und der Zylinderkörper vom Kabinenkörper gelöst. Ausfahren der Kolbenstange bewirkt nun ein Verfahren des Zylinderkörpers unter das Bodenniveau der Kabine und durch Aufstehen auf dem Boden letztendlich ein Anheben der Fahrzeugkabine. Dies gilt mutatis mutandis für Zylinder mit durchgehender Kolbenstange, wobei hier ggf. der Zylinderkörper für das Anheben der Fahrzeugkabine nicht vom Kabinenkörper gelöst werden muss. Bei Spindel- oder Linearantrieben gilt voran genanntes entsprechend.

Bei einer Fahrzeugkabine nach einem weiteren Aspekt weist die Bewegungseinrichtung an einem zweiten Ende, welches gegenüberliegend dem ersten Ende ist, eine Aufnahme auf. Dies kann den Vorteil haben, dass an die Bewegungseinrichtung Anbauten angebracht werden können, um den Verladevorgang zu vereinfachen.

Eine Fahrzeugkabine nach einem weiteren Aspekt umfasst weiterhin Stützen, welche dazu vorgesehen sind an die Aufnahme angebracht zu werden. Dies kann den Vorteil haben, dass der Verfahrweg reduziert werden kann, welcher für das Anheben von einem Trägerfahrzeug notwendig ist und die Bewegungseinrichtung so kleiner und leichter dimensioniert werden kann. Die Stützen können weiterhin so geformt sein, dass sie nach außen in Bezug auf eine senkrecht und längs (parallel zur Fahrtrichtung) mittig durch die Kabine verlaufende Ebene (Längsmittelebene) auskragen. Dies kann von Vorteil sein, da z.B. bei einem Ausfahren des Trägerfahrzeugs unter der an vier Ecken angehobenen Fahrzeugkabine möglicherweise die Hinterachse(n) des Trägerfahrzeugs ohne die auskragenden Stützen nicht durch den Abstand des vorderen Stützenpaares hindurchpassen würde(n), da Fahrzeugkabinen selten sehr viel breiter sind, als die Achsweite(n) der Hinterachse(n), d.h. ein seitlicher Überhang der Fahrzeugkabine in Bezug auf die Achsweite(n) gering bis nicht vorhanden ist und daher bei abgesenkten Bewegungseinrichtung nicht ausreichend Platz für die Durchfahrt der Achse(n) gegeben sein kann.

Eine Fahrzeugkabine nach einem weiteren Aspekt umfasst weiterhin Rollenaufnahmen, welche dazu vorgesehen und geeignet sind, dass Rollen an die Rollenaufnahmen befestigt werden können und in einem montierten Zustand über das Bodenniveau nach unten hinausstehen. Wahlweise kann die Fahrzeugkabine fest verbaute Rollen oder versenkbare (in den Innenraum der Fahrzeugkabine) Rollen aufweisen. Die Rollenaufnahmen oder an die Fahrzeugkabine befestigten Rollen können entsprechende Abdeckungen aufweisen, die für den Einsatz der Rollen entfernt werden können. Dies kann den Vorteil haben, dass ein Verladen der Fahrzeugkabine erleichtert wird.

Bei einer Fahrzeugkabine nach einem weiteren Aspekt kann die zumindest eine Bewegungseinrichtung parallel zu den beiden Verfahrrichtungen in zumindest zwei unterschiedlichen Positionen an den Kabinenkörper angebracht werden. Dies kann den Vorteil haben, dass jeweils der notwendige Verfahrweg verkürzt werden kann, wenn die Bewegungseinrichtung parallel zu den beiden Verfahrrichtungen versetzt wird. Damit kann die Bewegungseinrichtung kleiner dimensioniert werden.

Ein Fahrzeugverladesystem nach einem weiteren Aspekt umfasst eine Fahrzeugkabine nach einem der obigen Aspekte, Schienen und Rollen. Die Rollen sind dazu vorgesehen an entsprechende Aufnahmen an der Fahrzeugkabine angebracht zu werden. Die Schienen weisen eine Führung auf, die dazu vorgesehen ist mit den Rollen in Eingriff gebracht zu werden. Dies kann den Vorteil haben, dass die Fahrzeugkabine auf die angebrachten Rollen abgesetzt und über die Schienen verladen werden kann. Dies kann z.B. das Einbringen in einen Container oder auf eine sonstige Logistikplattform sein und die Schienen können dazu verwendet werden, die Fahrzeugkabine über den Niveauunterschied zwischen Containerboden und seiner Stellfläche zu überwinden. Die Schienen können in platzsparend in Halterungen an der Fahrzeugkabine oder einem Trägerfahrzeug verbaut werden. Ein Container im Sinne dieser Anmeldung kann jegliches Behältnis sein, das genug Innenraum bietet, um das Fahrzeugverladesystem unterzubringen.

Bei einem Fahrzeugverladesystem nach einem weiteren Aspekt sind die Schienen als Traktionshilfen ausgebildet, welche die Führung aufweisen. Traktionshilfen können z.B. Sandbleche mit einer für die Rollen passenden Führung sein. Dies kann den Vorteil haben, dass die Traktionshilfen einen Doppelnutzen haben.

Bei einem Fahrzeugverladesystem nach einem weiteren Aspekt sind die Schienen mehrteilig (z.B. ein gerader Schienenteil und ein gewinkelter Schienenteil) und ein Teil (z.B. der gewinkelte Schienenteil) ist als Fahrzeugwegrollsicherung vorgesehen und geeignet. Dies kann den Vorteil haben, dass die Schienen abgewinkelt verlaufen können und so ein besseres Verladen in z.B. einen Standartcontainer ermöglichen, weil die Schienen einen im Verhältnis längeren Teil aufweisen können, der für die Überwindung des Niveauunterschiedes zwischen dem Containerboden und seiner Stellfläche verwendet werden kann und einem abgewinkelten, im Verhältnis kürzeren Teil, der z.B. waagerecht auf den Containerboden aufgelegt werden kann und das Einbringen der Fahrzeugkabine in den Container erleichtert. Die Teile der Schiene können lösbar verbunden und so getrennt verstaut und der gewinkelte Teil z.B. als Wegrollsicherung für ein Trägerfahrzeug (Unterlegkeil) verwendet werden.

Bei einem Fahrzeugverladesystem nach einem weiteren Aspekt können die Stützen in einem Fahrzeugfahrzustand (d.h. das Trägerfahrzeug wird mit Fahrzeugkabine im Straßenverkehr bewegt) an das Trägerfahrzeug montiert werden. Dies kann den Vorteil haben, dass sie z.B. in Astabweiser oder Gepäckträger der Fahrzeugkabine und/oder des Trägerfahrzeugs integriert werden können und damit einen Doppelnutzen haben.

Ein Verfahren zur Fahrzeugverladung für Fahrzeuge mit einer Fahrzeugkabine nach einem weiteren Aspekt umfasst die folgenden Schritte:
- Verfahren eins Hubdachs einer Fahrzeugkabine vermittels zumindest einer Bewegungseinrichtung in einer zweiten Verfahrrichtung (Hubdach-Absenkrichtung) in eine eingefahrene Position;
- Lösen eines ersten Endes der Bewegungseinrichtung vom Hubdach;
- Verfahren der Bewegungseinrichtung in der zweiten Verfahrrichtung, sodass sich ein zweites Ende, welches dem ersten Ende gegenüberliegt unter ein Bodenniveau bewegt;
- Lösen der Fahrzeugkabine von einem Trägerfahrzeug;
- Abheben der Fahrzeugkabine vom Trägerfahrzeug durch Verfahren der Bewegungseinrichtung in der zweiten Richtung , sodass das zweite Ende in Kontakt mit dem Boden kommt;
- Ausfahren des Trägerfahrzeugs unter der Fahrzeugkabine;
- Absenken der Fahrzeugkabine durch Verfahren der Bewegungseinrichtung in einer ersten Verfahrrichtung entgegengesetzt zur zweiten Verfahrrichtung;
- Verladen der Fahrzeugkabine und des Trägerfahrzeugs in einen Container.

Dieses Verfahren kann den Vorteil haben, dass ein Fahrzeug mit Bordmitteln in einen Container verladen werden kann.

Bei einem Verfahren nach einem weiteren Aspekt wird im Schritt des Absenkens der Fahrzeugkabine, die Fahrzeugkabine auf Rollen abgesenkt, welche über das Bodenniveau hinausstehen. Dies kann den Vorteil haben, dass die Fahrzeugkabine einfach verschoben werden kann.

Bei einem Verfahren nach einem weiteren Aspekt wird im Schritt des Verladens das Trägerfahrzeug und die Fahrzeugkabine vermittels Rollen in Eingriff mit Schienen gebracht. Dabei weisen die Schienen eine Führung für die Rollen auf und die Fahrzeugkabine wird mit Hilfe der Schienen in den Container verladen. Dies kann den Vorteil haben, dass die Schienen einfach am Trägerfahrzeug und/oder der Fahrzeugkabine befestigt werden können.

Bei einem Verfahren nach einem weiteren Aspekt schiebt im Schritt des Verladens das Trägerfahrzeug die Fahrzeugkabine in den Container. Dies kann den Vorteil haben, dass der Verladevorgang vereinfacht wird.

Bei einem Verfahren nach einem weiteren Aspekt werden die Rollen vor dem Absenken an die Fahrzeugkabine angebracht. Dies kann den Vorteil haben, dass die Rollen nur für diesen Einsatz an die Fahrzeugkabine angebracht werden und nicht ständig Außeneinflüssen ausgesetzt sind.

Bei einem Verfahren nach einem weiteren Aspekt wird zwischen dem Schritt des Lösens des ersten Endes und dem Schritt des Anhebens der Fahrzeugkabine die Bewegungseinrichtung von einer Position in eine andere Position an einem Kabinenkörper der Fahrzeugkabine montiert. Dies kann den Vorteil haben, dass die Bewegungsrichtung somit in der jeweilig notwendigen Verfahrrichtung versetzt wird und weniger Weg für den jeweiligen Schritt (Anheben des Hubdaches oder Anheben der Kabine) benötigt. Somit kann die Bewegungsrichtung kleiner und leichter dimensioniert und der Verladevorgang verkürzt werden.

Zum besseren Verständnis der Erfindung wird diese anhand der nachfolgenden Figuren näher erläutert. Es zeigen jeweils in stark vereinfachter, schematischer Darstellung:
Fig. 1 ein Ausführungsbeispiel eines Trägerfahrzeugs mit einem Ausführungsbeispiel einer Fahrzeugkabine mit Hubdach im eingefahrenen Zustand.
Fig. 2 das Ausführungsbeispiel der Fig. 1, wobei die Fahrzeugkabine in einem ausgefahrenen Zustand befindlich ist.
Fig. 3 das Ausführungsbeispiel der Figuren. 1 und 2, wobei die Fahrzeugkabine in einem eingefahrenen Zustand befindlich ist und eine Bewegungseinrichtung auf den Boden abgesenkt dargestellt ist.
Fig. 4 das Ausführungsbeispiel der Fahrzeugkabine der Figuren 1 bis 3, wobei die Fahrzeugkabine durch die Bewegungseinrichtung abgestützt ist.
Fig. 5 das Verladen der Fahrzeugkabine in einen Container.
Fig. 6 die unterschiedlichen Positionen der Bewegungseinrichtung einer Fahrzeugkabine nach dem Ausführungsbeispiel der Figuren 1 bis 3.
Fig. 7 ein Ausführungsbeispiel einer an einen Container angelegten Schiene.
Fig. 8 ein Ausführungsbeispiel einer Schiene im Querschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf (funktions-)gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen bzw. auf ein Fahrzeug auf einer horizontalen Ebene stehend und sind diese Lageangaben bei einer Lageänderung sinngemäß auf die neue Lage zu übertragen. Im Hinblick auf die folgende detaillierte Beschreibung der Figuren wird sowohl eine Fahrzeugkabine, ein Fahrzeugverladesystem und ein Verfahren zur Fahrzeugverladung für Fahrzeuge mit einer Fahrzeugkabine beschrieben. Die Verfahrensschritte sind in die Vorrichtungsbeschreibung eingeflochten.

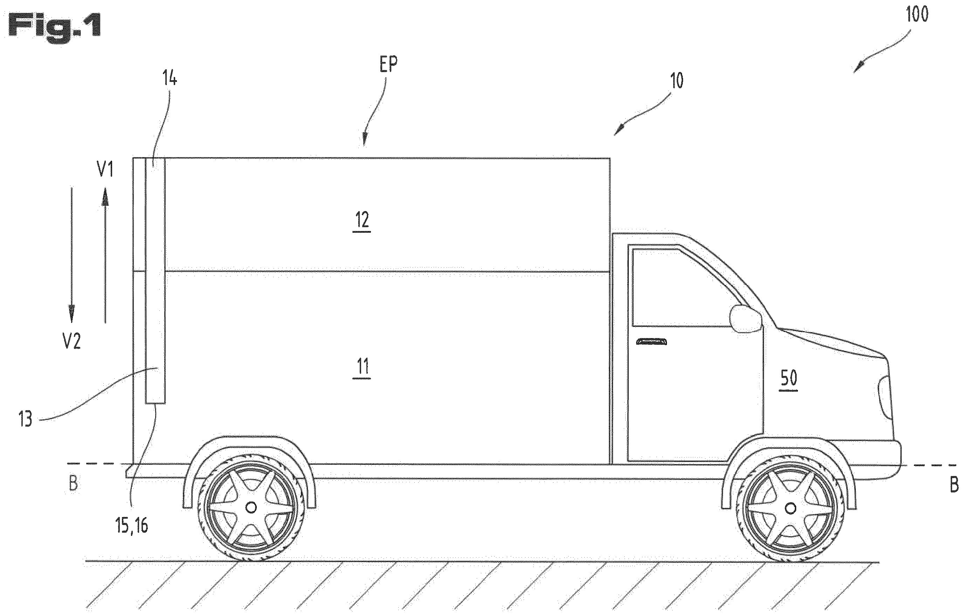

Anfänglich wird Bezug genommen auf Fig. 1, welche eine Fahrzeugkabine 10 und ein Fahrzeugverladesystem 100 darstellt. Die Fahrzeugkabine 10 umfasst einen Kabinenkörper 11 und ein Hubdach 12. Eine Bewegungseinrichtung 13 ist wirkverbunden mit dem Kabinenkörper 11 und dem Hubdach 12. Die Bewegungseinrichtung 13 weist ein erstes Ende 14 und ein zweites Ende 15 auf, wobei das erste Ende 14 mit dem Hubdach 12 verbunden ist und das zweite Ende 15 mit dem Kabinenkörper 11 verbunden sein kann. Zum Anheben und Absenken des Hubdaches ist es notwendig, dass die Bewegungseinrichtung 13 zum einen mit dem Kabinenkörper 11 und mit dem Hubdach 12 verbunden ist. Die Bewegungseinrichtung 13 umfasst an ihrem zweiten Ende 15 weiterhin eine Aufnahme 16.

Die Fahrzeugkabine 10 ist in einer eingefahrenen Position EP dargestellt, d.h. das Hubdach 12 ist soweit als möglich auf den Kabinenkörper 11 abgesenkt. Die Bewegungseinrichtung 13 kann in zwei Richtungen bewegt werden. In der ersten Verfahrrichtung V1 hebt die Bewegungseinrichtung 13 das Hubdach 12 vom Kabinenkörper 11 nach oben und vergrößert so einen Innenraum der Fahrzeugkabine 10. In einer zweiten Verfahrrichtung V2 senkt die Bewegungseinrichtung 13 das Hubdach 12 auf den Kabinenkörper 11 ab und verkleinert so den Innenraum der Fahrzeugkabine 10.

Die Fahrzeugkabine 10 ist auf ein Trägerfahrzeug 50 montiert, welches auf dem Boden steht, wobei sich das Trägerfahrzeug 50 im Bereich der Fahrzeugkabine 10 unter einem Bodenniveau B befindet. Das Bodenniveau B ist eine Ebene, in welcher die Unterseite der Fahrzeugkabine 10 liegt. Eine etwaige Lagerung der Fahrzeugkabine 10 (z.B. ein Zwischenrahmen) kann zumindest teilweise zur Fahrzeugkabine 10 gehörend betrachtet werden, das Bodenniveau B verläuft in diesem Fall horizontal durch den oder die tiefsten Punkte der Fahrzeugkabine 10, d.h. den/die Punkt(e), die den kürzesten Abstand zum Boden haben.

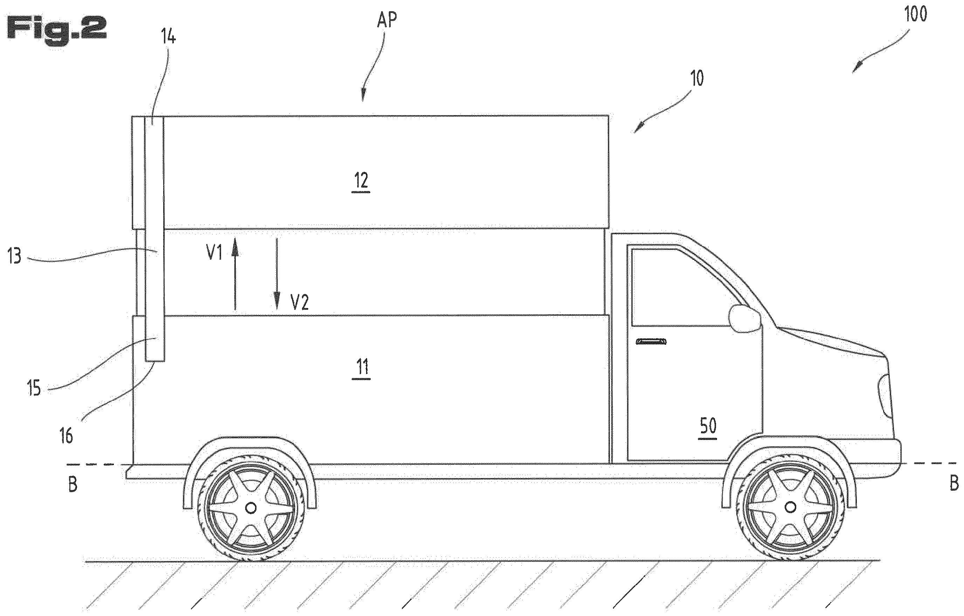

In Fig. 2 ist die Fahrzeugkabine in ihrer ausgefahrenen Position AP dargestellt. In Fig. 2 ist das Hubdach vermittels der Bewegungseinrichtung 13 in der ersten Verfahrrichtung V1 verfahren und so der Innenraum der Fahrzeugkabine 10 vergrößert worden. Hierzu ist das zweite Ende 15 am Kabinenkörper 11 befestigt und das erste Ende 14 am Hubdach 12. Dann entfernt sich das erste Ende 14 vom zweiten Ende 15 in der ersten Verfahrrichtung V1 und hebt das Hubdach 12 vom Kabinenkörper 11 an. Somit ist das erste Ende 14 der Bewegungseinrichtung 13 beweglich in Bezug auf das zweite Ende 15. Dies kann selbstverständlich auch umgekehrt sein. Die Bewegungseinrichtung 13 kann z.B. durch einen Hydaulikzylinder, einen Pneumatikzylinder, einen Spindelantrieb oder einen Linearantrieb realisiert werden.

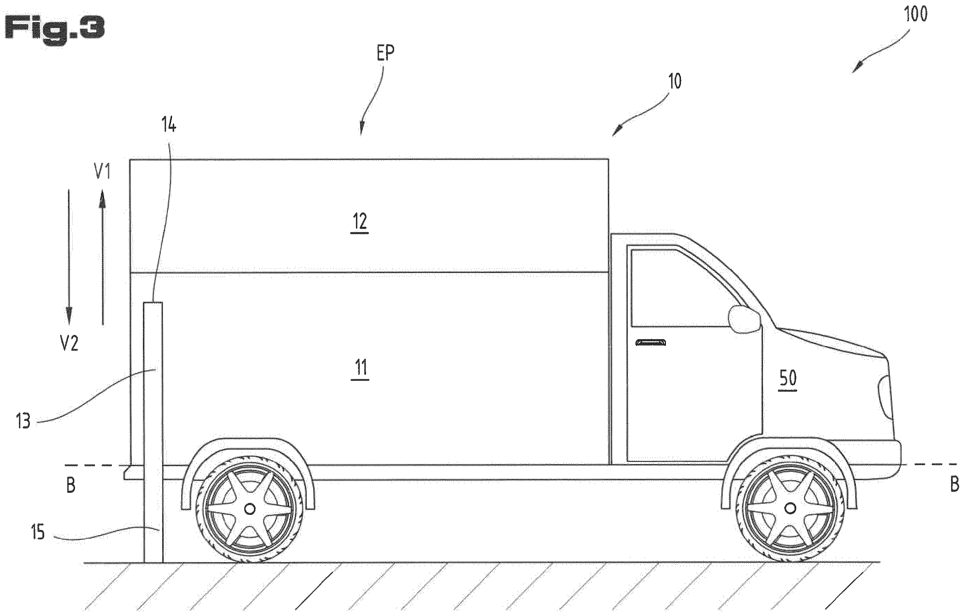

In Fig. 3 ist die Kabine in der eingefahrenen Position EP und das erste Ende 14 der Bewegungseinrichtung 13 wurde vom Hubdach 12 gelöst und am Kabinenkörper 11 befestigt. Dann wird die Bewegungseinrichtung 13 durch den Boden der Fahrzeugkabine 10 und unter das Bodenniveau B verfahren, bis das zweite Ende mit dem Boden auf welchem das Trägerfahrzeug 50 steht, in Berührung kommt. Jedes weitere Verfahren in derselben Richtung hebt folglich die Fahrzeugkabine in Bezug auf den Boden und das Trägerfahrzeug 50 an. Wahlweise kann die Bewegungseinrichtung 13 insgesamt in der zweiten Verfahrrichtung V2 versetzt werden und somit näher am Boden im Kabinenkörper 11 befestigt werden.

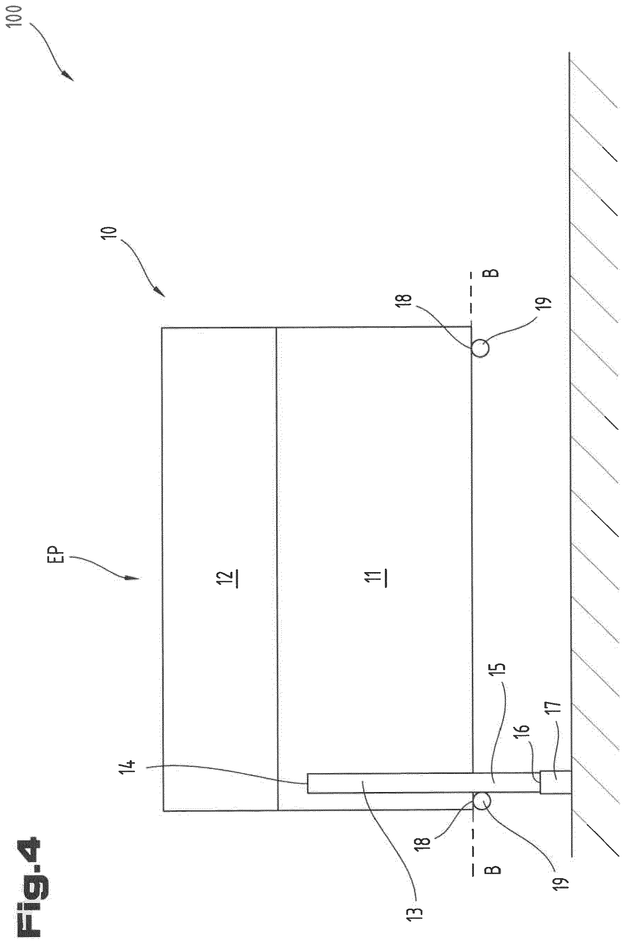

In Fig. 4 ist die Fahrzeugkabine 10 in einem in Bezug auf den Boden angehobenen Zustand dargestellt (es ist der Einfachheit halber nur eine Bewegungseinrichtung dargestellt). Die Bewegungseinrichtung 13 umfasst an ihrem zweiten Ende 15 eine Stütze 17, welche mit der Aufnahme 16 verbunden ist. Weiterhin umfasst der Kabinenkörper 11 an Rollenaufnahmen 18 montierte Rollen 19, welche unter das Bodenniveau B stehen. Das Trägerfahrzeug 50 wurde unter der Fahrzeugkabine 10 herausgefahren.

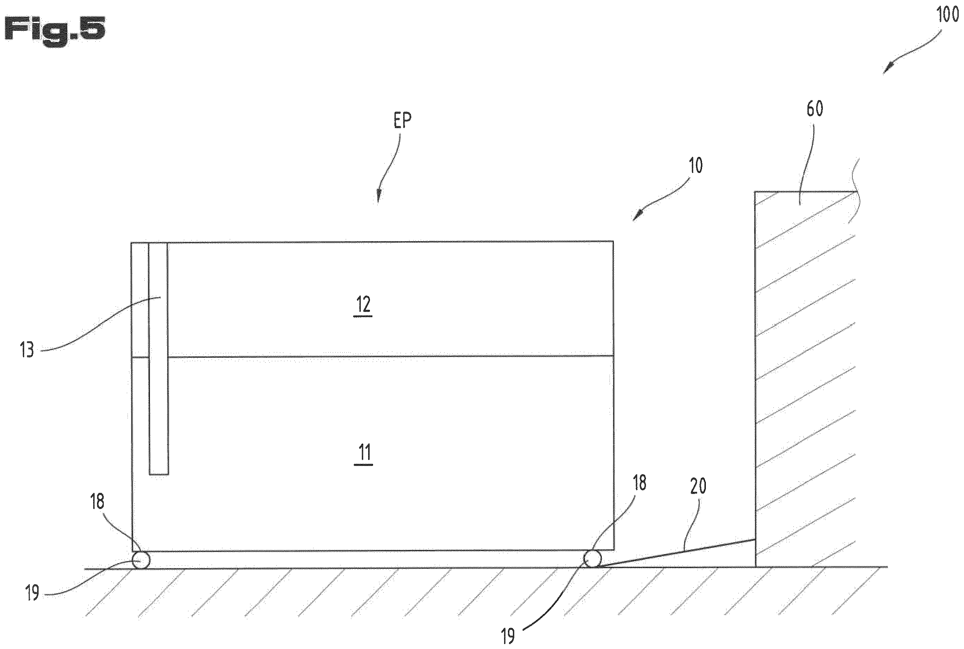

Fig. 5 zeigt die Fahrzeugkabine 10 der Fig. 4, wobei sie auf die Rollen 19 abgelassen wurde. Das Fahrzeugverladesystem 100 umfasst weiterhin zumindest eine Schiene 20, welche in Fig. 5 mit einem Ende auf dem Boden und dem anderen Ende in einem Container 60 aufliegt. Die Bewegungseinrichtung 13 wurde im Vergleich zur Darstellung der Fig. 4 wieder vollständig innerhalb der Fahrzeugkabine 10 angeordnet. Die Fahrzeugkabine 10 befindet sich in der eingefahrenen Position EP. Über die Schiene 20 kann die Fahrzeugkabine 10 wie dargestellt vermittels der Rollen 19 in den Container 60 geschoben werden.

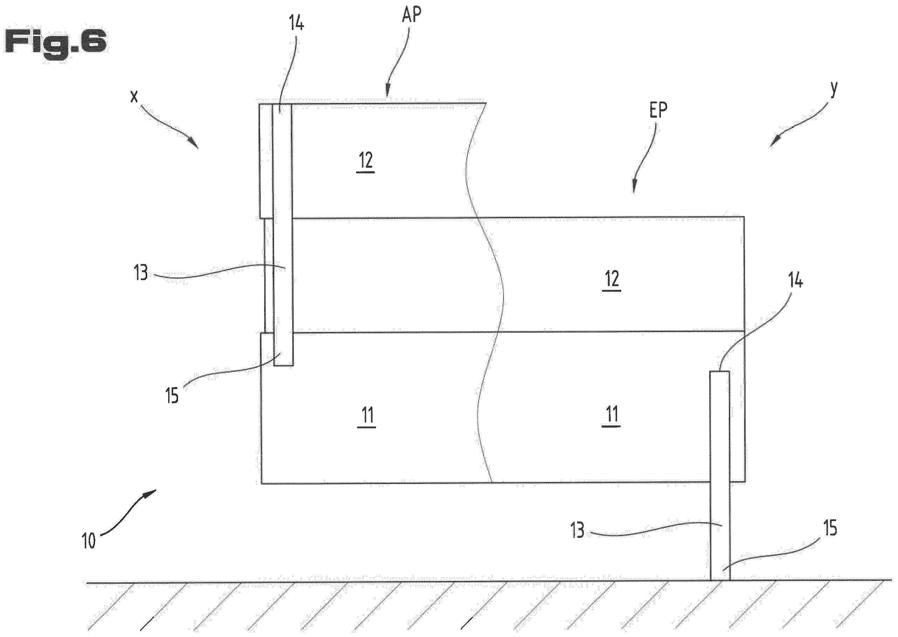

Fig. 6 zeigt einen Vergleich einer wahlweisen Anbringposition der Bewegungseinrichtung 13 an der Fahrzeugkabine 10. Im linken, mit x gekennzeichneten, Teil von Fig. 6 ist das Hubdach 12 in der ausgefahrenen Position AP und die Bewegungseinrichtung 13 ist mit ihrem ersten Ende am Hubdach 12 und mit ihrem zweiten Ende 15 am Kabinenkörper 11 befestigt. Im rechten, mit y gekennzeichneten, Teil von Fig. 6 ist das Hubdach 12 in der eingefahrenen Position EP und die Bewegungseinrichtung 13 ist mit ihrem ersten Ende am Kabinenkörper 11 befestigt und steht mit dem zweiten Ende 15 auf dem Boden auf. Damit ist die unterschiedliche Position der Bewegungseinrichtung 13 in der Fahrzeugkabine 10 deutlich erkennbar. Durch die unterschiedliche Positionierung in der jeweils benötigten Verfahrrichtung, kann der Verfahrweg der Bewegungseinrichtung 13 besser genutzt und diese kleiner und damit leichter dimensioniert werden.

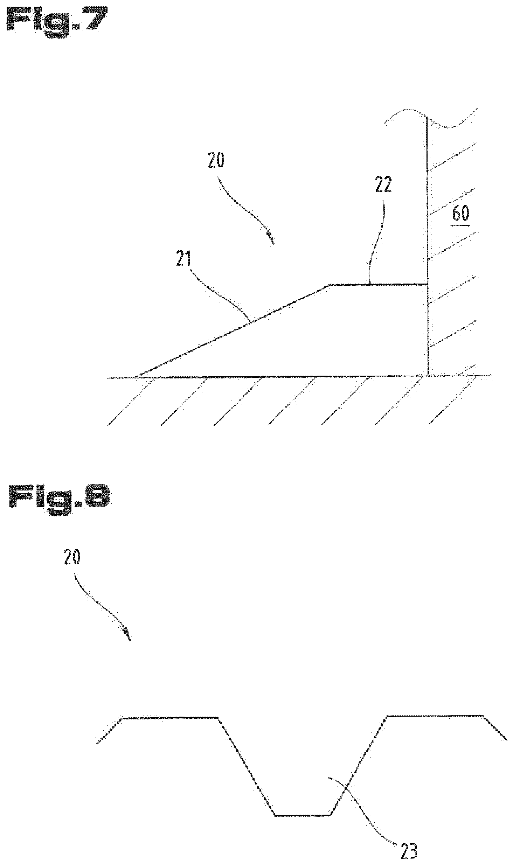

Fig. 7 zeigt ein weiteres Ausführungsbeispiel einer Schiene 20, umfassend einen geraden Schienenteil 21 und einen gewinkelten Schienenteil 22. Der gerade Schienenteil 21 liegt auf dem Boden auf und der gewinkelte Schienenteil 22 an einem Container 60. Die beiden Teile 21 und 22 sind lösbar miteinander verbunden. Der gerade Schienenteil 21 kann beispielsweise als Traktionshilfe (z.B. Sandblech) für das Trägerfahrzeug 50 verwendet werden und der gewinkelte Schienenteil 22 kann als Wegrollsicherung für das Trägerfahrzeug 50 verwendet werden.

Fig. 8 zeigt ein weiteres Ausführungsbeispiel einer Schiene 20 im Querschnitt. Es ist insbesondere eine Führung 23 dargestellt, welche der Schiene 20 zum einen Stabilität verleiht (Sicke) und zum anderen mit den Rollen 19 z.B. in Fig. 5 zusammenpasst, sodass die Rolle 19 beim Schieben der Fahrzeugkabine 10 in der Führung 23 geführt wird.

In den vorangegangenen Beispielen wurde der Übersichtlichkeit überwiegend lediglich eine Bewegungseinrichtung dargestellt. Jedoch können mehrere Bewegungseinrichtungen in einer Fahrzeugkabine gemäß der vorliegenden Offenbarung vorgesehen werden. Es können z.B. zwei Bewegungseinrichtungen vorgesehen sein, welche an parallelen Seiten der Fahrzeugkabine ansetzen oder vier Bewegungseinrichtungen, welche in den Ecken der Fahrzeugkabine oder auch im Bereich der Seitenmitten angeordnet sind.

Der Schutzbereich ist durch die Ansprüche bestimmt. Die Beschreibung und dieZeichnungen sind jedoch zur Auslegung der Ansprüche heranzuziehen. Einzelmerkmale oder Merkmals-kombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenliste

- 10: Fahrzeugkabine
- 11: Kabinenkörper
- 12: Hubdach
- 13: Bewegungseinrichtung
- 14: erstes Ende
- 15: zweites Ende
- 16: Aufnahme
- 17: Stützen
- 18: Rollenaufnahmen
- 19: Rollen
- 20: Schienen
- 21: gerader Schienenteil
- 22: gewinkelter Schienenteil
- 23: Führung
- 50: Trägerfahrzeug
- 60: Container
- 100: Fahrzeugverladesystem

- B: Bodenniveau
- V1: erste Verfahrrichtung
- V2: zweite Verfahrrichtung
- EP: eingefahrenen Position
- AP: ausgefahrene Position

## Patentansprüche

1. Fahrzeugkabine (10) umfassend einen Kabinenkörper (11), ein Hubdach (12) und zumindest eine Bewegungseinrichtung (13) , wobei die Bewegungseinrichtung mit dem Kabinenkörper und dem Hubdach so verbunden ist, dass sie das Hubdach in einer ersten Verfahrrichtung (V1) aus einer eingefahrenen Position (EP) in eine ausgefahrene Position (AP) verfahren kann, **dadurch gekennzeichnet, dass**
die Bewegungseinrichtung an einem ersten Ende (14) lösbar mit dem Hubdach verbunden ist, und wobei die Bewegungseinrichtung in einem vom Hubdach gelösten Zustand in einer zweiten Verfahrrichtung (V2), welche entgegengesetzt zur ersten Verfahrrichtung ist, unter ein Bodenniveau (B) der Fahrzeugkabine (10) verfahrbar ist.

2. Fahrzeugkabine (10) nach Anspruch 1, bei welcher die Bewegungseinrichtung (13) an einem zweiten Ende (15), welches gegenüberliegend dem ersten Ende ist, eine Aufnahme (16) aufweist.

3. Fahrzeugkabine (10) nach Anspruch 2, weiterhin umfassend Stützen (17), welche dazu vorgesehen sind an die Aufnahme (16) angebracht zu werden.

4. Fahrzeugkabine (10) nach einem der vorangegangenen Ansprüche, weiterhin umfassend Rollenaufnahmen (18), dazu vorgesehen und geeignet, dass Rollen (19) an die Rollenaufnahmen befestigt werden können und in einem montierten Zustand über das Bodenniveau (B) hinausstehen.

5. Fahrzeugkabine (10) nach einem der vorangegangenen Ansprüche, wobei die zumindest eine Bewegungseinrichtung (13) parallel zu den beiden Verfahrrichtungen (V1, V2) in zumindest zwei unterschiedlichen Positionen an den Kabinenkörper (11) angebracht werden kann.

6. Fahrzeugverladesystem (100) umfassend eine Fahrzeugkabine (10) nach einem der vorangegangenen Ansprüche, Schienen (20) und Rollen (19), wobei die Rollen dazu vorgesehen sind, an entsprechende Aufnahmen an der Fahrzeugkabine (10) angebracht zu werden und die Schienen eine Führung (23) aufweisen, die dazu vorgesehen ist mit den Rollen (19) in Eingriff gebracht zu werden.

7. Fahrzeugverladesystem (100) nach Anspruch 6, wobei die Schienen (20) als Traktionshilfen ausgebildet sind.

8. Fahrzeugverladesystem (100) nach Anspruch 6 oder 7, wobei die Schienen (20) mehrteilig (21, 22) sind und ein Teil (22) als Fahrzeugwegrollsicherung vorgesehen und geeignet ist.

9. Fahrzeugverladesystem (100) nach Anspruch 6 oder 7, wobei die Stützen (17) in einem Fahrzeugfahrzustand an ein Trägerfahrzeug (50) montiert werden können.

10. Verfahren (200) zur Fahrzeugverladung für Fahrzeuge mit einer Fahrzeugkabine (10), umfassend die folgenden Schritte:
- Verfahren eins Hubdachs (12) einer Fahrzeugkabine (10) vermittels zumindest einer Bewegungseinrichtung (13) in einer zweiten Verfahrrichtung (V2) in eine eingefahrene Position (EP);
- Lösen eines ersten Endes (14) der Bewegungseinrichtung (13) vom Hubdach (12);
- Verfahren der Bewegungseinrichtung (13) in der zweiten Verfahrrichtung (V2), sodass sich ein zweites Ende (15), welches dem ersten Ende (13) gegenüberliegt unter ein Bodenniveau (B) bewegt;
- Lösen der Fahrzeugkabine (10) von einem Trägerfahrzeug (50);
- Abheben der Fahrzeugkabine (10) vom Trägerfahrzeug (50) durch Verfahren der Bewegungseinrichtung in der zweiten Verfahrrichtung (V2), sodass das zweite Ende (15) in Kontakt mit dem Boden kommt;
- Ausfahren des Trägerfahrzeugs (50) unter der Fahrzeugkabine (10);
- Absenken der Fahrzeugkabine (10) durch Verfahren der Bewegungseinrichtung (13) in einer ersten Verfahrrichtung (V1), entgegengesetzt zur zweiten Verfahrrichtung (V2);
- Verladen der Fahrzeugkabine (10) und des Trägerfahrzeugs (50) in einen Container (60).

11. Verfahren (200) nach Anspruch 10, wobei im Schritt des Absenkens der Fahrzeugkabine (10) die Fahrzeugkabine auf Rollen (19) abgesenkt wird, welche über das Bodenniveau (B) hinausstehen.

12. Verfahren nach Anspruch 10 oder 11, wobei im Schritt des Verladens das Trägerfahrzeug (50) und die Fahrzeugkabine (10) vermittels Rollen (19) in Eingriff mit Schienen (20) gebracht werden, welche eine Führung (23) für die Rollen aufweisen und die Fahrzeugkabine mit Hilfe der Schienen in den Container (60) verladen wird.

13. Verfahren nach einem der Ansprüche 10 bis 12, wobei im Schritt des Verladens das Trägerfahrzeug (50) die Fahrzeugkabine (10) in den Container (60) schiebt.

14. Verfahren nach einem der Ansprüche 11 bis 13, wobei die Rollen (19) vor dem Absenken an die Fahrzeugkabine (10) angebracht werden.

15. Verfahren nach einem der Ansprüche 10 bis 14, wobei zwischen dem Schritt des Lösens des ersten Endes (14) und dem Schritt des Anhebens der Fahrzeugkabine (10) die Bewegungseinrichtung (13) von einer Position in eine andere Position an einem Kabinenkörper (11) der Fahrzeugkabine (10) montiert wird.

## Claims

1. Vehicle cabin (10) comprising a cabin body (11), a lifting roof (12) and at least one movement device (13), the movement device being connected to the cabin body and the lifting roof in such a way that it can move the lifting roof in a first direction of travel (V1) from a retracted position (EP) into an extended position (AP), **characterized in that**
the movement device is detachably connected to the lifting roof at a first end (14), and wherein the movement device, in a state detached from the lifting roof, can be moved below a floor level (B) of the vehicle cabin (10) in a second direction of travel (V2) which is opposite to the first direction of travel.

2. Vehicle cabin (10) according to claim 1, in which the movement device (13) has a receptacle (16) at a second end (15), which is opposite the first end.

3. Vehicle cabin (10) according to claim 2, further comprising supports (17) which are intended to be attached to the receptacle (16).

4. Vehicle cabin (10) according to any one of the preceding claims, further comprising castor receptacles (18) provided and adapted to allow castors (19) to be attached to the castor receptacles and to protrude above the floor level (B) in an assembled state.

5. Vehicle cabin (10) according to any one of the preceding claims, wherein said at least one movement device (13) can be mounted on said cabin body (11) in at least two different positions parallel to said two directions of travel (V1, V2).

6. A vehicle loading system (100) comprising a vehicle cabin (10) according to any one of the preceding claims, rails (20) and rollers (19), wherein the rollers are intended to be mounted on corresponding receptacles on the vehicle cabin (10) and the rails have a guide (23) intended to be engaged with the rollers (19).

7. Vehicle loading system (100) according to claim 6, wherein the rails (20) are designed as traction aids.

8. Vehicle loading system (100) according to claim 6 or 7, wherein the rails (20) are multipart (21, 22) and one part (22) is provided and suitable as a vehicle path roll protection.

9. Vehicle loading system (100) according to claim 6 or 7, wherein the supports (17) are mountable to a carrier vehicle (50) in a vehicle travelling condition.

10. A vehicle loading method (200) for vehicles having a vehicle cabin (10), comprising the steps of:
- Moving a lifting roof (12) of a vehicle cabin (10) by means of at least one moving device (13) in a second direction of travel (V2) into a retracted position (EP);
- releasing a first end (14) of the movement device (13) from the lifting roof (12);
- moving the moving means (13) in the second travel direction (V2) so that a second end (15) opposite the first end (13) moves below a ground level (B);
- detaching the vehicle cabin (10) from a carrier vehicle (50);
- lifting the vehicle cabin (10) from the carrier vehicle (50) by moving the moving device in the second direction of travel (V2) so that the second end (15) comes into contact with the ground;
- Extending the carrier vehicle (50) under the vehicle cabin (10);
- lowering the vehicle cabin (10) by moving the movement device (13) in a first direction of travel (V1), opposite to the second direction of travel (V2);
- loading the vehicle cabin (10) and the carrier vehicle (50) into a container (60).

11. Method (200) according to claim 10, wherein in the step of lowering the vehicle cabin (10), the vehicle cabin is lowered onto rollers (19) which protrude above the ground level (B).

12. Method according to claim 10 or 11, wherein in the step of loading, the carrier vehicle (50) and the vehicle cabin (10) are brought by means of rollers (19) into engagement with rails (20) having a guide (23) for the rollers and the vehicle cabin is loaded into the container (60) by means of the rails.

13. Method according to any one of claims 10 to 12, wherein in the loading step the carrier vehicle (50) pushes the vehicle cabin (10) into the container (60).

14. Method according to any one of claims 11 to 13, wherein the rollers (19) are attached to the vehicle cabin (10) before lowering.

15. Method according to any one of claims 10 to 14, wherein between the step of releasing the first end (14) and the step of raising the vehicle cabin (10), the moving device (13) is mounted from one position to another position on a cabin body (11) of the vehicle cabin (10).

## Revendications

1. Cabine de véhicule (10) comprenant un corps de cabine (11), un toit relevable (12) et au moins un dispositif de déplacement (13), le dispositif de déplacement étant relié au corps de cabine et au toit relevable de telle sorte qu'il peut déplacer le toit relevable dans une première direction de déplacement (V1) d'une position rétractée (EP) à une position déployée (AP), **caractérisée en ce que**
le dispositif de déplacement est relié de manière amovible au toit relevable à une première extrémité (14), et dans lequel le dispositif de déplacement peut être déplacé, dans un état détaché du toit relevable, dans une deuxième direction de déplacement (V2), qui est opposée à la première direction de déplacement, sous un niveau de sol (B) de la cabine de véhicule (10).

2. Cabine de véhicule (10) selon la revendication 1, dans laquelle le dispositif de déplacement (13) présente un logement (16) à une deuxième extrémité (15) qui est opposée à la première extrémité.

3. Cabine de véhicule (10) selon la revendication 2, comprenant en outre des supports (17) destinés à être montés sur le logement (16).

4. Cabine de véhicule (10) selon l'une quelconque des revendications précédentes, comprenant en outre des logements de roulettes (18), prévus et adaptés pour que des roulettes (19) puissent être fixées aux logements de roulettes et dépasser du niveau du sol (B) à l'état monté.

5. Cabine de véhicule (10) selon l'une des revendications précédentes, dans laquelle le au moins un dispositif de déplacement (13) peut être monté sur le corps de la cabine (11) parallèlement aux deux directions de déplacement (V1, V2) dans au moins deux positions différentes.

6. Système de chargement de véhicule (100) comprenant une cabine de véhicule (10) selon l'une des revendications précédentes, des rails (20) et des galets (19), les galets étant prévus pour être montés sur des logements correspondants sur la cabine de véhicule (10) et les rails présentant un guide (23) qui est prévu pour être mis en prise avec les galets (19).

7. Système de chargement de véhicule (100) selon la revendication 6, dans lequel les rails (20) sont conçus comme des aides à la traction.

8. Système de chargement de véhicule (100) selon la revendication 6 ou 7, dans lequel les rails (20) sont en plusieurs parties (21, 22) et une partie (22) est prévue et adaptée pour servir de sécurité de roulement du véhicule.

9. Système de chargement de véhicule (100) selon la revendication 6 ou 7, dans lequel les supports (17) peuvent être montés sur un véhicule porteur (50) dans un état de déplacement du véhicule.

10. Procédé (200) de chargement de véhicule pour des véhicules ayant une cabine de véhicule (10), comprenant les étapes suivantes :
- Déplacement d'un toit relevable (12) d'une cabine de véhicule (10) au moyen d'au moins un dispositif de déplacement (13) dans une deuxième direction de déplacement (V2) dans une position rétractée (EP) ;
- libération d'une première extrémité (14) du dispositif de déplacement (13) du toit relevable (12) ;
- Déplacement du dispositif de déplacement (13) dans la deuxième direction de déplacement (V2) de sorte qu'une deuxième extrémité (15), qui est opposée à la première extrémité (13), se déplace sous un niveau de sol (B) ;
- Détachement de la cabine de véhicule (10) d'un véhicule porteur (50) ;
- Décollage de la cabine de véhicule (10) du véhicule de support (50) par déplacement du dispositif de déplacement dans la deuxième direction de déplacement (V2), de sorte que la deuxième extrémité (15) vienne en contact avec le sol ;
- Sortie du véhicule porteur (50) sous la cabine du véhicule (10) ;
- Abaissement de la cabine de véhicule (10) par déplacement du dispositif de déplacement (13) dans une première direction de déplacement (V1), opposée à la deuxième direction de déplacement (V2) ;
- Chargement de la cabine de véhicule (10) et du véhicule porteur (50) dans un conteneur (60).

11. Procédé (200) selon la revendication 10, dans lequel, lors de l'étape d'abaissement de la cabine du véhicule (10), la cabine du véhicule est abaissée sur des roulettes (19) qui dépassent le niveau du sol (B).

12. Procédé selon la revendication 10 ou 11, dans lequel, lors de l'étape de chargement, le véhicule porteur (50) et la cabine de véhicule (10) sont amenés, au moyen de galets (19), en contact avec des rails (20) comportant un guide (23) pour les galets, et la cabine de véhicule est chargée dans le conteneur (60) à l'aide des rails.

13. Procédé selon l'une des revendications 10 à 12, dans lequel, à l'étape de chargement, le véhicule porteur (50) pousse la cabine de véhicule (10) dans le conteneur (60).

14. Procédé selon l'une des revendications 11 à 13, dans lequel les roulettes (19) sont fixées à la cabine (10) du véhicule avant l'étape d'abaissement.

15. Procédé selon l'une quelconque des revendications 10 à 14, dans lequel, entre l'étape de libération de la première extrémité (14) et l'étape de levage de la cabine de véhicule (10), le dispositif de déplacement (13) est monté sur un corps de cabine (11) de la cabine de véhicule (10), d'une position à une autre position.
